# EUROPÄISCHE PATENTANMELDUNG

(11) **EP 1 992 577 A1**
(43) Veröffentlichungstag der Anmeldung: **19.11.2008**
(21) Anmeldenummer: 08005398.6
(22) Anmeldetag: 21.03.2008
(51) Int. Cl.: B65F 1/06, B65F 1/16

(54) **Altstoffsammelbehälter**

(30) Priorität: 14.05.2007 AT 7482007
(71) Anmelder: System Entsorgung Gmbh, 4694 Ohlsdorf (AT)
(72) Erfinder: Huber, Erwin, 4694 Ohlsdorf (AT)
(74) Vertreter: Secklehner, Günter

(57) **Zusammenfassung**

Die Erfindung beschreibt einen Altstoffsammelbehälter (1) mit einem Behälterboden (4), einem Behältermantel (3) und einem Behälterdeckel (2), die einen Behälterinnenraum (10) definieren, wobei im Behälterinnenraum (10) zumindest ein Gestänge (6) angeordnet ist, mit dem der Behälterdeckel (2) über zumindest eine Sperrvorrichtung (12) lösbar verbunden ist. Das Gestänge (6) ist - in Draufsicht auf den Behälter betrachtet - außermittig angeordnet.

## Beschreibung

Die Erfindung betrifft einen Altstoffsammelbehälter, insbesondere für Datenträger, wie z. B. Papier, mit einem Behälterboden, einem Behältermantel und einem Behälterdeckel, die einen Behälterinnenraum definieren, wobei im Behälterinnenraum zumindest ein Gestänge angeordnet ist, mit dem der Behälterdeckel über zumindest eine Sperrvorrichtung lösbar verbunden ist.

Gattungsgemäße Sammelbehälter sind aus der EP 0 656 303 A und der EP 1 076 016 A der Anmelderin bekannt.

So beschreibt die EP 0 656 303 A einen Papiersammler mit einem Sammelsack und einem Sackhalter der Mittel zum Festlegen des oberen Endes des Sammelsackes und einen Deckel zum Verschließen des offen von ihm gehaltenen Sammelsackes aufweist, wobei der Sackhalter einen schmalen Einwurfschlitz aufweist. Der Einwurfschlitz ist am Deckel des Sackhalters oder bei einer der horizontalen Kanten des rechteckig ausgebildeten Deckels vorgesehen. Der Sammelsack hat mindestens eine dem Einwurfschlitz benachbarte Durchgangsöffnung. Die Durchgangsöffnungen des Sammelsackes können von Klebstoffbereichen zumindest teilweise umgeben sein. Weiters können der Deckel und der den Sammelsack umgebender Behälter aus Karton, Wellpappe oder einem anderen Leicht-Plattenmaterial hergestellt sein.

Nachteilig daran ist, dass dieser Behälter nicht versperrbar ist und somit für Papier und Akten, welche der Geheimhaltung bedürfen, nicht verwendet werden kann.

Die EP 1 076 016 A beschreibt einen Sammelbehälter mit einer Einwurföffnung für Abfälle, insbesondere für Altpapier, welches gegebenenfalls Aufzeichnungen enthält, die der Geheimhaltung bedürfen, bestehend aus einem Gehäuse, einem innenliegenden Sammelinnenbehälter, insbesondere einem Sammelsack, und einem Gestänge, mit welchem der Sammelinnenbehälter lagefixiert gehalten wird, wobei das Gehäuse aus einem Bodenteil und einem auf diesen Bodenteil aufgesetzten oder über diesen Bodenteil gestülpten Behälter besteht, der sich aus einer oberseitigen Abdeckung und einer Umfangswandung zusammensetzt, wobei der Behälter mit dem Bodenteil lösbar verbunden ist, wobei das Gestänge innerhalb des Gehäuses aufragend angeordnet ist und an dem der Sammelinnenbehälter lösbar befestigt ist, wobei das Gestänge mit dem Bodenteil verbunden ist und Einrichtungen, sowie gegebenenfalls weitere Einrichtungen zur Halterung und Lagefixierung des Sammelinnenbehälters aufweist und wobei der Behälter zur Entnahme des Sammelinnenbehälters über den Sammelinnenbehälter und das Gestänge hinaus angehoben wird. Eine am Gestänge angeordnete Lasch ragt mittig durch eine im Bereich der oberseitigen Abdeckung angeordnete Ausnehmungen des Behälters und ist mit einem Vorhängeschloss derart verriegelt werden, dass der Behälter von Unbefugten nicht angehoben werden kann, wobei der Verbindungsbügel bei einer mittig angeordneten Lasche zwischen dieser Lasche und einer der beiden Krümmungen eine Biegung aufweist. Das Gestänge besteht aus zwei Teilen, wovon ein erster Teil U-förmig ausgebildet ist und mit seinen beiden Standplatten einschiebbar in eine Aufnahme des Bodenteils mit diesem verbunden ist und in seinem Schwerpunkt gelenkig mit dem zweiten Teil verbunden ist, der in alle Richtungen ungehindert schwenkbar ist, wobei die beiden Enden des zweiten Teiles frei innerhalb des Gehäuses im Nahbereich der oberseitigen Abdeckung liegen.

Prinzipiell hat sich dieser versperrbare Behälter bewährt, jedoch konnte in der Praxis festgestellt werden, dass die Entleerung dieses Behälters kraftaufwendig ist, da der Behälter über den Sack und das Gestänge hinaus angehoben werden muss, sodass diese Behälter nicht von Jedermann bedient werden kann.

Aufgabe vorliegender Erfindung ist daher einen einfacher handhabbaren versperrbaren Altstoffsammelbehälter zu schaffen.

Diese Aufgabe wird mit dem eingangs genannten Altstoffsammelbehälter gelöst, bei dem das Gestänge - in Draufsicht auf den Behälter betrachtet - außermittig angeordnet ist. Es ist damit nicht mehr erforderlich für das entleeren des Sammelbehälters diesen über das Gestänge hinaus anzuheben, sondern kann der Inhalt nach Entfernung des Deckels von oben heraus genommen werden. Insbesondere es damit auch möglich, einen weiteren Sammelbehälter in dem Altstoffsammelbehälter einfacher anzuordnen, da das Gestänge, über das die Versperrbarkeit erreicht wird, nicht mehr zentral über diesem angeordnet ist, sodass eine Aufhängung des weiteren Sammelbehälters zur Lagefixierung nicht mehr erforderlich ist, sondern kann damit dieser Sammelbehälter, wenn dieser beispielsweise als Sammelsack ausgebildet ist, einfach zwischen dem Behälterdeckel und dem Behältermantel fixiert werden. Zudem konnte festgestellt werden, dass auch der Einwurf des Altmaterials, also beispielsweise von Altpapier, problemloser ist, wiederum aus dem Grund, dass das Gestänge distanzierter von der Einwurfstelle platziert werden kann. Überraschenderweise wurde zudem festgestellt, dass die Stabilität Altstoffsammelbehälters, welche mit ein Grund für die mittige Anordnung des Gestänges im Stand der Technik ist, unter der außermittigen Anordnung nicht leidet. Dies ist von besonderer Bedeutung, wenn der Altstoffsammelbehälter im Zuge der Aktenvernichtung eingesetzt wird.

Vorzugsweise ist das Gestänge mit dem Behältermantel verbunden. Es können damit die Sicherheit gegen unbefugtes Abheben des Deckels sowie die Stabilität des Altstoffsammelbehälters erhöht werden. Damit ist es wiederum möglich, den Sammelbehälter bei hoher Sicherheit hinsichtlich des unbefugten Zugriffs von Dritten aus einem leichteren Material, wie z.B. einem Karton, herzustellen, sodass dieser also nicht zwangsweise aus Metall bestehen muss.

Das Gestänge kann - wie dies bereits aus dem Stand der Technik bekannt ist - U-förmig mit einer Basis und zwei Schenkel ausgebildet sein und in Bezug auf die Schenkel vertikal im Behälterinnenraum angeordnet ist. Die Basis ist dabei in geringem Abstand zur dem Behälterinnenraum zugewandten Oberfläche des Behälterdeckels angeordnet. Es ist damit möglich, dass die Sperrvorrichtung im Behälterdeckel angeordnet ist und mit der Basis des u-förmigen Gestänges zum Versperren des Behälters zusammenwirkt. Es ist also bei dem erfindungsgemäßen Altstoffsammelbehälter, auf durchstehende Laschen zu verzichten, die mit einem Vorhängeschloss gesichert werden, sondern qualitativ hochwertigere Sperrvorrichtungen zu verwenden, wodurch die Sicherheit gegen unbefugtes Öffnen des Altstoffsammelbehälters erhöht werden kann.

Das Gestänge kann andererseits am Behälterdeckel angeordnet sein, wodurch eine sehr geringe Bauhöhe der gesamten Sperrvorrichtung erreicht werden kann. Insbesondere ist es damit möglich, dass für das Entleeren das Gestänge zusammen mit Behälterdeckel abgenommen wird, wodurch der Zugang zum Behälterinnenraum weiter vereinfacht werden kann.

Das Gestänge kann die Form des Querschnittes des Behältermantels - in Draufsicht betrachtet - aufweisen, also das Gestänge in den seitlichen Bereichen des Behälterdeckel angeordnet sein, wodurch einerseits die Querstabilität erhöht werden kann und andererseits das Einwerfen von Altmaterial, insbesondere Papier, weiter verbessert werden kann.

Bei dieser Ausführungsvariante ist es auch möglich, dass das Gestänge mehrteilig ausgebildet ist und zumindest ein Teil mit dem Behältermantel verbunden ist, um die Stabilität und die Sicherheit des Zusammenhaltes des Behälterdeckels und des Behältermantels verbessert werden können.

Der Behälterboden kann zumindest zwei in Richtung auf den Behältermantel weisende Seitenwände aufweisen - vorzugsweise ist dieser ebenso wie der Behälterdeckel wannenförmig ausgebildet - die mit dem Gestänge verbunden sind. Es kann damit auf eine Verbindung des Behälterbodens mit dem Behältermantel im Bereich der Aufstandsfläche des Altstoffsammelbehälters, wie diese aus dem Stand der Technik bekannt ist, verzichtet werden, sodass diese ungestört als Aufstandsfläche für den weiteren, innerhalb des Altstoffsammelbehälters anordenbaren Sammelbehälter zur Verfügung steht. Es ist damit die Anbindung des Behälterbodens an das Gestänge einfacher, z.B. mittels Schrauben, ausführbar.

Der Behältermantel kann im Verbindungsbereich mit dem Gestänge zwischen diesem und den Seitenwänden des Behälterbodens angeordnet sein, wodurch einerseits eine Vereinfachung der Verbindung möglich ist, indem diese beiden Teile des Altstoffsammelbehälters gemeinsam an den jeweiligen Befestigungspunkten mit dem Gestänge verbunden sind. Darüber hinaus kann auch die Ausreißsicherheit der Verbindung in Art einer "Doppelung" erhöht, was besonders vorteilhaft ist, wenn als Werkstoff für den Altstoffsammelbehälter ein Karton oder eine Wellpappe verwendet wird.

Die zumindest eine Sperrvorrichtung ist vorzugsweise durch eine Zylinderschloss mit einem Drehriegel, der an einem Ende des Zylinderschlosses angeordnet ist, welches in Richtung auf den Behälterinnenraum weist, gebildet ist, wobei der Drehriegel mit dem Gestänge zum Versperren des Behälters zusammenwirkt. Es kann also damit ,bei dem erfindungsgemäßen Altstoffsammelbehälter einerseits eine qualitativ hochwertigere Sperrvorrichtung verwendet werden, anderseits ist es damit auch möglich, den Überstand dieser Sperrvorrichtung über den Behälterdeckel zu minimieren, sodass also beispielsweise das Aufschlagen mittels Hammer bzw. das Aufbrechen des Altstoffsammelbehälters erschwert wird.

Der Drehriegel kann als Winkelelement ausgebildet sein, für eine Ausführungsvariante der Erfindung, bei der das Gestänge am Behälterdeckel angeordnet ist.

Weiters ist es möglich, dass der Altstoffsammelbehälter - in Draufsicht betrachtet - einen fünfeckigen Querschnitt aufweist. Obwohl es im Rahmen der Erfindung selbstverständlich möglich ist, dass dieser jeden beliebigen Querschnitt aufweisen kann, bietet doch das Fünfeck den Vorteil, dass damit eine Sammelsack als weiterer Sammelbehälter mit höherer Sicherheit gegen Verrutschen eingespannt werden kann, da mit dem fünften Eck eine höhere Spannung für die Halterung des Sammelsackes erreicht werden kann. Dies ist insbesondere am Beginn der Befüllung von Vorteil, da in diesem Stadium die Gefahr des Abrutschens des Sammelsackes aus seiner Halterung am größten ist, insbesondere wenn schwerere Altstoffe eingeworfen werden.

Durch die zumindest zweiteilige Ausbildung des Behältermantels des Altstoffsammelbehälters kann die Zugänglichkeit des Behälterinnenraums weiter erhöht werden, indem ein Teil des Behältermantels zu Entleerung des Altstoffsammelbehälters entfernt werden kann.

Die beiden Teile können dabei jeweils zwei Behälterseitenwände aufweisen, die sich im zusammengebauten Zustand des Behälters großflächig überlappen, wodurch die Stabilität des Altstoffsammelbehälters erhöht wird.

Zur einfacheren Demontage und Montage der beiden Teile des Behältermantels ist es von Vorteil, wenn diese über ein Klettband miteinander verbunden werden können. Dieses Klettband kann dabei im Bereich der überlappenden Seitenwände angeordnet sein, also je zumindest ein Klettband pro überlappende Seitenwand.

Weiters ist es möglich, dass am Gestänge im Behälterinnenraum Laschen angeordnet sind, die beabstandet zu einer inneren Oberfläche des Behältermantels sind und die überlappenden Seitenwände bereichsweise zwischen diesen Laschen und den überlappenden Seitenwänden des zweiten Teils des Behältermantels angeordnet sind wodurch eine Fixierung der überlappenden Seitenwände erreicht wird, auch wenn kein Klettband oder eine andere Verbindungseinrichtung der jeweiligen überlappenden Seitenwände angeordnet ist.

Wenn die beiden Teile des Behältermantels verschwenkbar miteinander verbunden sind kann ein Teil zur Entleerung des Altstoffsammelbehälters verschwenkt werden, wodurch ebenfalls die Handhabung des Altstoffsammelbehälters sowie der Zugang zum Behälterinnenraum erleichtert ist.

Im Behälterinnenraum kann ein weiterer Behälter, insbesondere ein Sammelsack, angeordnet sein, wobei in mehreren Ecken des Behältermantels des Altstoffsammelbehälters Durchbrüche bzw. Ausnehmungen vorgesehen sein können, in denen der weitere Behälter gehaltert ist. Es ist damit eine einfache Lagefixierung des weiteren Behälters möglich.

Durch die Ausbildung des Gestänges mit zwei u-förmigen Gestängeteilen mit jeweils einer Basis bilden, wobei eine Basis dem Behälterdeckel und eine Basis dem Behälterboden zugeordnet ist, ist es möglich gleichartige Gestänge unabhängig von der Größe des Altstoffsammelbehälters zu verwenden.

Es ist weiters möglich, dass der Behälterboden über zumindest eine Sperrvorrichtung mit dem Behältermantel verbunden ist, sodass die Demontage des Altstoffsammelbehälters vereinfacht werden kann.

Zum besseren Verständnis der Erfindung wird diese anhand der nachfolgenden Figuren näher erläutert.

Es zeigen jeweils in stark schematisch vereinfachter Darstellung:
- Fig. 1: eine Ausführungsvariante eines erfindungsgemäßen Altstoffsammelbehälters in Frontansicht;
- Fig. 2: den Altstoffsammelbehälter nach Fig. 1 in Draufsicht;
- Fig. 3: den Altstoffsammelbehälter nach Fig. 1 in Rückansicht ohne rückwärtige Wand;
- Fig. 4: eine Schrägansicht von unten auf den Behälterdeckel des Altstoffsammelbehälters nach Fig.1;
- Fig. 5: einen Ausschnitt aus dem Behälterinnenraum des Altstoffsammelbehälters nach Fig. 1;
- Fig. 6: eine Ausführungsvariante eines Gestänges für den Altstoffsammelbehälter;
- Fig. 7: eine andere Ausführungsvariante eines Gestänges für den Altstoffsammelbehälter;
- Fig. 8: eine weitere Ausführungsvariante eines Gestänges für den Altstoffsammelbehälter;
- Fig. 9: einen Querschnitt in horizontaler Ebene durch einen Altstoffsammelbehälter;
- Fig. 10: einen Querschnitt in horizontaler Ebene eines anderen Altstoffsammelbehälter;
- Fig. 11: einen Behältermantel eines Altstoffsammelbehälters mit verschwenkbarer Rückwand;
- Fig. 12: einen Behältermantel eines Altstoffsammelbehälters zur Verwendung mit einem Sammelsack.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

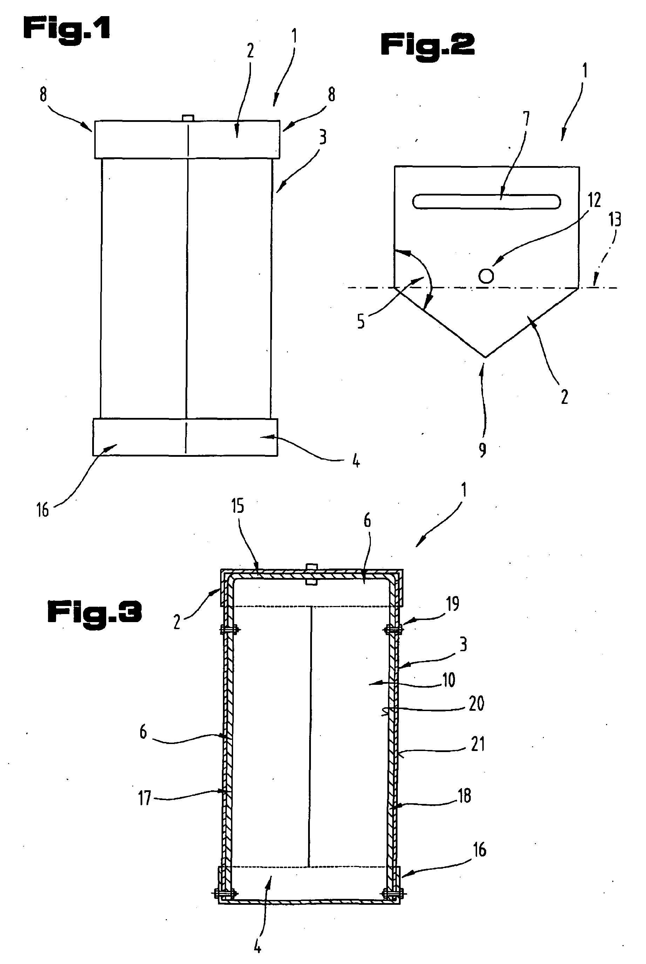

In den Fig. 1 bis 5 ist ein Altstoffsammelbehälter 1 zur Verwendung als Papiersammelbehälter, insbesondere für Altpapier, welches der Aktenvernichtung zugeführt werden muss, also von geheimhaltungsbedürftigen Schriftstücken, dargestellt.

Obwohl im Folgenden ausschließlich die Verwendung des Altstoffsammelbehälters 1 im Zuge des Recyclingprozesses von Altpapier beschrieben wird, ist dieser Altstoffsammelbehälter 1 prinzipiell auch zur Sammlung von andern Altstoffen, beispielsweise Kunststoff, Alttextilien, Batterien oder dgl., oder von Datenträgern allgemein, wie z.B. Disketten, Tonbänder oder dgl. Geeignet, wozu gegebenenfalls geringfügige Adaptierungen dieses Altstoffsammelbehälters 1 erforderlich sind, insbesondere im Hinblick auf die Einwurföffnung für die Altstoffe, d.h. deren Querschnitt.

Der Altstoffsammelbehälter 1 nach Fig. 1 umfasst einen Behälterdeckel 2, einen Behältermantel 3, sowie einen Behälterboden 4. Diese Bestandteile des Altstoffsammelbehälters 1 sind bei dieser Ausführungsvariante insbesondere voneinander trennbar ausgeführt, wobei für deren Trennung gegebenenfalls ein Werkzeug verwendet werden muss. Insbesondere ist der Behälterdeckel 2 abnehmbar vom Behältermantel 3 ausgeführt. Der Behälterboden 4 kann in einer·Ausführungsvariante der Erfindung wiederum mit einem Teil des Behältermantels 3 fix verbunden sein, wie dies später im Detail noch näher ausgeführt wird.

Der Behälterdeckel 2 und/oder der Behältermantel 3 und/oder der Behälterboden 4 können aus einem Metall, insbesondere einem Leichtmetall, wie z.B. Aluminium oder eine Aluminiumlegierung bestehen, ebenso ist es möglich, dass diese Teile aus Karton, Wellpappe, Kunststoff, wie z.B. Polypropylen bzw. Verbundwerkstoffen, insbesondere aus den genannten Werkstoffen, wie z.B. beschichtete Karton- oder Wellpappewerkstoffe bestehen. Von Vorteil ist es, wenn als Werkstoff für den Altstoffsammebehälter 1, d.h. den Behälterdeckel 2 und/ oder den Behältermantel 3 und/oder den Behälterboden 4, brandbeständige oder brandhemmende Werkstoffe (insbesondere entsprechend der Brandschutzklasse) verwendet werden, beispielsweise brandhemmend ausgebildete Kunststoffe, wobei diesen Kunststoffen, wie bekannt, z.B. brandhemmende Borsalze zugesetzt sein können.

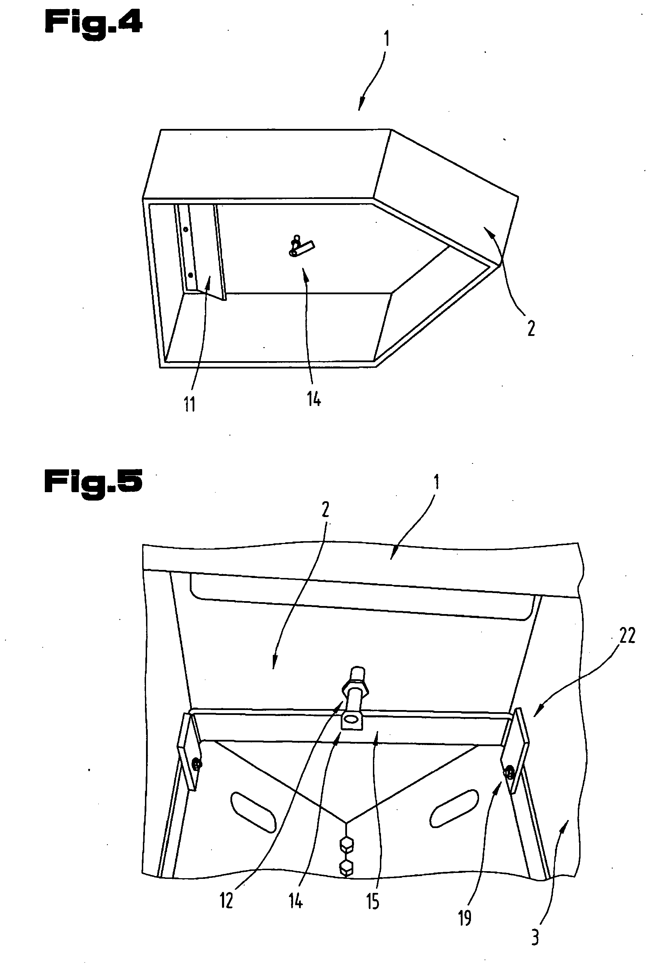

Wie insbesondere aus den Fig. 2 und 4 ersichtlich ist, welche den Behälterdeckel 2 zeigen, weist der Altstoffsammelbehälter 1 bevorzugt einen fünfeckigen Querschnitt auf. In wesentlichen entspricht dieser Querschnitt einem Rechteck, dessen eine Seite, insbesondere eine Langseite, durch ein Dreieck ersetzt ist (in Draufsicht betrachtet). Dabei kann ein Winkel 5, den eine Seite des Dreieckes mit einer Schmalseite des Rechteckes einnimmt, ausgewählt sein aus einem Bereich mit einer unteren Grenze von 120° und einer oberen Grenze von 150°, dieser Winkel insbesondere 135° betragen.

Obwohl es im Rahmen der Erfindung prinzipiell möglich ist, dass der Altstoffsammelbehälter 1 jeden beliebigen Querschnitt aufweisen kann, also beispielsweise einen dreieckigen, einen viereckigen, einen sechseckigen, etc. - in Draufsicht betrachtet - bietet die Ausbildung mit fünfeckigem Querschnitt den Vorteil, dass, wenn in diesem Altstoffsammelbehälter 1 ein weiterer innerer Behälter, insbesondere ein Sammelsack, angeordnet wird, dieser besser lagefixiert werden kann, indem nämlich durch die Überstülpung des Behältermantels 3 im oberen, dem Behälterdeckel 2 zugewandten Endbereich mit dem Sammelsack auf diesen durch das fünfte Eck in gewisser Weise eine Spannung bzw. ein Zug ausgeübt wird. Dieses ist insbesondere von Vorteil, da, anders als im Stand der Technik beschrieben, dieser Altstoffsammelbehälter 1 an einem Gestänge 6, wie dies aus Fig. 3 ersichtlich ist, keine weiteren Mittel zur Lagefixierung des Sammelsackes, wie beispielsweise Hacken oder dgl. aufweist.

Wie aus Fig. 2 ersichtlich ist, weist der Altstoffsammelbehälter 1 bei dieser Ausführungsvariante im Behälterdeckel 2 einen Einwurfschlitz 7 für das Altpapier auf. Wie bereits voranstehend ausgeführt, kann dieser Einwurfschlitz 7 bei Bedarf hinsichtlich seiner Geometrie abgeändert werden, wenn der Altstoffsammelbehälter 1 für andere Altstoffe als Altpapier verwendet wird.

Dieser Einwurfschlitz 7 ist im hinteren Randbereich des Behälterdeckels 2 angeordnet. Es ist auch möglich, den Einwurfschlitz 7 - nicht dargestellt - in einer von mehreren Deckseitenwänden 8 anzuordnen, bevorzugt wiederum an der Rückseite des Altstoffsammelbehälters 1, also jener Seite, welche einer Spitze 9 zur Ausbildung des Fünfecks des Altstoffsammelbehälters 1 gegenüberliegend angeordnet ist. Bedarfsweise kann dieser Einwurfschlitz 7 aber auch im Bereich einer Stirnseite des Behältermantels 3, welche auf den Behälter 2 zugewandt ist, im Behältermantel 3 angeordnet sein.

Wie insbesondere aus Fig. 4 ersichtlich ist, ist an der Unterseite des Behälterdeckels 2, welcher einem Behälterinnenraum 10 zugeordnet ist (Fig. 3), den Einwurfschlitz 7 überdeckend ein Eingriffsabweiser 11 angeordnet, um einerseits eine Schlichtung des eingeworfenen Altpapiers im Behälterinnenraum 10 zu erreichen und andererseits den Eingriff in den Behälterinnenraum 10 durch den Einwurfschlitz 7 unbefugten zu erschweren bzw. um diesen Eingriff zu verhindern. Selbstverständlich ist die Anordnung dieses Eingriffsabweisers 11 nicht zwingend erforderlich.

Weiters ist im Behälterdeckel 2 eine Sperrvorrichtung 12 dem Einwurfschlitz 7 gegenüberliegend im Bereich einer imaginären Linie 13, welche zwischen dem gedachten Rechteck und dem gedachten, angesetzten Dreieck des Querschnittes verläuft, angeordnet. Diese Sperrvorrichtung 13 ist bevorzugt durch ein Zylinderschloss gebildet, wobei an diesem Zylinderschloss an jenem Ende, welches dem Behälterinnenraum 10 zugewandt ist, ein so genannter Drehriegel 14 angeordnet ist (Fig. 4), der mit einer Basis 15 des Gestänges 6 zum lösbaren Sperren des Behälterdeckels 2 mit dem Behältermantel 3 angeordnet ist, wie dies insbesondere aus Fig. 5 ersichtlich ist. Durch die dezentrale Anordnung dieser Sperrvorrichtung 12 und damit verbunden die dezentrale Anordnung des Gestänges 6 wird erreicht, dass der Einwurfschlitz 7 zum Unterschied zum Stand der Technik frei ist, sodass der Einwurf von Papier in den Altstoffsammelbehälter 1 ungestörter erfolgen kann.

Es sei an diese Stelle erwähnt, dass unter dezentraler Anordnung bzw. außermittige Anordnung der Sperrvorrichtung 12 bzw. des Gestänges 6 gemeint ist, dass kein Teil dieser Sperrvorrichtung 12 bzw. des Gestänges 6 durch den Schwerpunkt einer beliebigen, zur Aufstandsfläche parallelen Querschnittsebene verläuft.

Sowohl der Behälterdeckel 2 als auch der Behälterboden 4 können wannenförmig ausgebildet sein, mit einerseits den Deckelseitenwänden 8 bzw. andererseits mit Bodenseitenwänden 16 (Fig. 1). Wie insbesondere aus Fig. 4 ersichtlich ist, können dabei Kanten gerundet ausgeführt sein. Es wird damit eine mögliche Verletzungsgefahr minimiert.

Diese bevorzugte wannenförmige Ausbildung des Behälterdeckels und des Behälterbodens 4 ist nicht zwingend erforderlich, es können beispielsweise auch nur zwei einander gegenüberliegende Deckelseitenwände 8 oder Bodenseitenwände 16 angeordnet sein. Des Weiteren ist es möglich, dass der Behälterboden 4 mit dem Behältermantel 3 einstückig ausgebildet ist bzw. mit einem Teil des Behältermantels 3 einstückig ausgebildet ist. Es besteht nämlich die Möglichkeit, den Behältermantel 3 mehrteilig auszubilden, wie dies weiter unten noch näher erläutert wird. Die wannenförmige Ausbildung des Behälterbodens 4 und des Behälterdeckels 2 hat jedoch den Vorteil, dass damit diese über den Behältermantel 3 gestülpt werden können, wie dies beispielsweise aus Fig. 1 oder Fig. 3 ersichtlich ist, wodurch der aus diesen drei bzw. vier Teilen gebildete Altstoffsammelbehälter 1 einfacher zusammenbaubar ist und eine größere Stabilität erhält.

Im Hinblick auf die Stabilität des Altstoffsammelbehälters 1 sei erwähnt, dass es im Rahmen der Erfindung selbstverständlich möglich ist, dass beispielsweise der Behältermantel 3 außen und/oder innen vertikal und/oder horizontal verlaufende Verstärkungsstege oder dgl. aufweisen kann.

Das Gestänge 6 ist bei dieser Ausführungsvariante U-förmig ausgebildet, wie dies aus Fig. 3 ersichtlich ist, mit einer Basis 15, welche den Behälterdeckel 2 zugewandt ist und zwei einander gegenüberliegende, mit der Basis verbundene, insbesondere einteilig mit der Basis 15 ausgebildete Schenkel 17, 18, die sich in Richtung des Behältermantels 3 vertikal nach unten in Richtung auf den Behälterboden 4 erstrecken. Dieses Gestänge 6, d.h. die Schenkel 17, 18 sind dabei mit dem Behältermantel 3 verbunden, beispielsweise über Schrauben 19, die sich von einer äußeren Oberfläche 20 des Behältermantels 3 durch diesen und durch das Gestänge 6 in Richtung auf den Behälterinnenraum 10 erstrecken. Im Behälterinnenraum 10 sind diese Schrauben mit einer Mutter versehen und weisen diese Schrauben 19 an einer äußeren Oberfläche 21 einen bevorzugt runden Kopf auf, der nicht für den Eingriff des Werkzeuges vorgesehen ist, um das Öffnen dieser Schrauben 19 von außen zu verhindern. Beispielsweise können diese Schrauben 19 einen mehrkantigen, z.B. sechskantigen, Mittelbereich aufweisen, der mit einer sechskantigen Öffnung des Gestänges zusammenwirkt, um damit das Anziehen der Muttern zu erleichtern. Selbstverständlich besteht auch die Möglichkeit anstelle von Schrauben 19 andere Verbindungsmittel vorzusehen, beispielsweise Nieten oder dgl., allerdings haben diese den Nachteil, dass sie nicht gelöst werden können und damit der Altstoffsammelbehälter 1 nachträglich nicht mehr zerlegt werden kann.

Bei der Ausführungsvariante des Altstoffsammelbehälters 1 nach den Fig. 1 bis 5 sind vier Schrauben 19 zur Verbindung des Gestänges 6 mit dem Behältermantel 3 vorgesehen. Es kann jedoch auch eine dazu unterschiedliche Anzahl an Schrauben 19 vorhanden sein, also mehr oder weniger als vier, beispielsweise nur zwei Schrauben 19 im Bereich unterhalb des Behälterdeckels 2, wenn der Behälterboden 4 mit dem Behältermantel 3 einstückig ausgebildet ist.

Es können aber auch sechs oder acht Schrauben 19 vorgesehen, sodass in vertikaler Erstreckung des Behältermantels 3 dieser mehrfach mit dem Gestänge 6 verbunden ist.

Die Schrauben 19, die im Bereich des Behälterbodens 4 angeordnet sind, erstrecken sich auch durch die Bodenseitenwände 16 des Behälterbodens 4, sodass dieser also über diese Bodenseitenwände 16 mit dem Gestänge 6 verbunden wird, sodass auf komplexere Lösung mit Bodenplatten, wie dies aus dem Stand der Technik gemäß der EP 1 076 016 B1 bekannt ist oder durch Verschweißen des Gestänges 6 mit dem Behälterboden 4 im Rahmen der Erfindung verzichtet werden kann.

Das Gestänge 6 bietet darüber hinaus eine Möglichkeit der Versteifung des Altstoffsammelbehälters 1, indem dieses mit dem Behältermantel 3 verbunden ist.

Prinzipiell kann das Gestänge 6 aus dem selben Material wie der Altstoffsammelbehälter 1 bestehen, bevorzugt ist das Gestänge 6 jedoch zumindest teilweise aus Metall, insbesondere Leichtmetall oder einer Leichtmetalllegierung, z.B. Aluminium, gefertigt, insbesondere die Basis 15 im Bereich des Eingriffes des Drehriegels 14.

Die Verbindung des Behälterbodens 4 über die Schrauben 19 mit dem Gestänge 6 durch eine Seitenwand des Behältermantels 3 hat zudem den Vorteil, dass damit eine größere Ausrissfestigkeit erhalten wird, wobei diese auch so erreicht werden kann, dass die Schrauben 19 mit zusätzlichen Verstärkungsmaterialien, wie z.B. Beilagscheiben oder dgl., versehen werden können, wodurch der Vorteil erreicht wird, dass für den Altstoffsammelbehälter 1 auch leichtere Werkstoffe verwendet werden können, wie z.B. Karton oder Wellpappe. Diese Verstärkung ist insbesondere auch aus Fig. 5 ersichtlich.

Fig. 5 zeigt zudem das Zusammenwirken des Gestänges 6 mit der Sperrvorrichtung 12, insbesondere dem Drehriegel 14, indem dieser durch Verdrehung in Eingriffstellung unterhalb der Basis 15 des Gestänges 6 verbracht wird und damit das Abheben des Behälterdeckels 2 vom Behältermantel 3 verhindert werden kann. Zum Öffnen wird dieser Drehriegel 14 aus seiner Eingriffsstellung mit der Basis 15 verbracht.

Es besteht weiters nach einer Ausführungsvariante dazu die Möglichkeit, dass das Gestänge 6 einen u-förmigen Querschnitt aufweist, zumindest im Bereich des Eingriffs des Drehriegels 14, also diese Gestänge zumindest einmal gefaltet ist - im Querschnitt betrachtet - und dass der Drehriegel 14 in den dadurch gebildeten Zwischenraum eingreift, sodass dieser also sowohl in Richtung auf den Behälterdeckel 2 als auch auf den Behälterboden 4 von dem Gestänge 6 teilweise umgeben ist. Des weiteren besteht die Möglichkeit bei dieser Ausführungsvariante, dass das Gestänge 6 im Bereich des Drehriegels 14 Ausnehmungen bzw. Freistellungen aufweist, beispielsweise Ausfräsungen oder Schlitzen, wobei der Drehriegel 14 über diese Ausnehmungen bzw. Freistellungen mit der Basis 15 in Eingriff gebracht werden kann, sodass der Altstoffsammelbehälter 1 in mehrere Richtungen sicherbar ist.

In Fig. 5 ist weiters dargestellt, dass im Bereich der Schrauben 19, d.h. der Verbindungsvorrichtungen zwischen dem Behältermantel 3 und dem Gestänge 6, an diesem Gestänge 6 Laschen 22 angeordnet sein können, wobei bei der Ausführung nach Fig. 5 diese Laschen 22 einen getrennten Teil vom Gestänge 6 darstellen, diese jedoch auch einteilig mit dem Gestänge 6 ausgebildet sein können. Die Funktion dieser Laschen 22, welche in Richtung auf die Rückwand des Behältermantels 3 über das Gestänge 6 vorstehen, wird weiter unten noch näher erläutert.

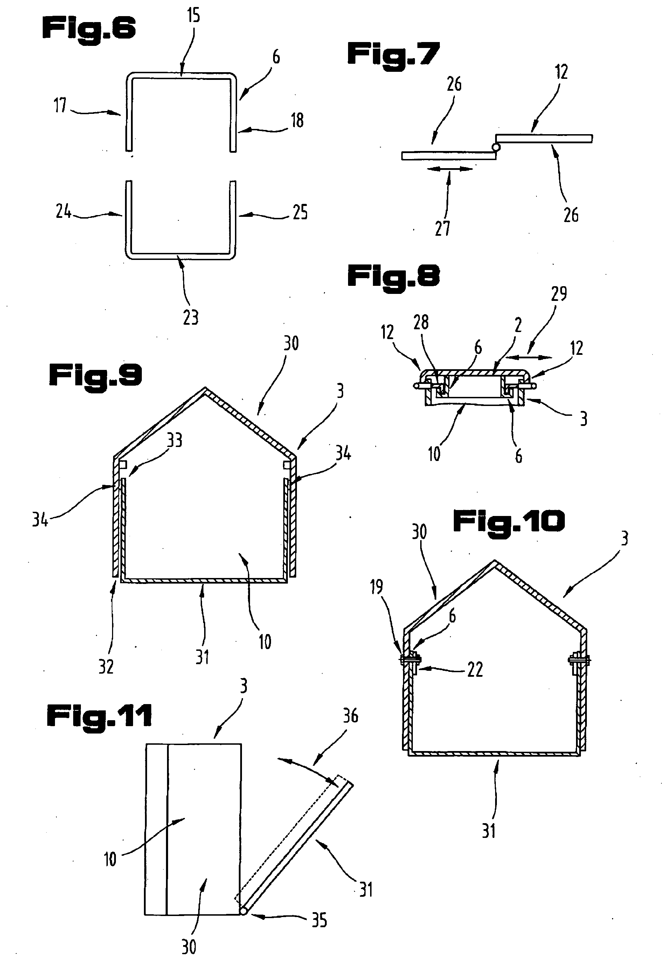

In Fig. 6 ist eine Ausführungsvariante des Gestänges 6 dargestellt. Dabei besteht dieses Gestänge 6 aus zwei u-förmigen Bügeln mit jeweils der Basis 15 sowie einer Basis 23, die einerseits dem Behälterdeckel 2 und andererseits dem Behälterboden 4 (Fig. 1) zugewandt sind. An diesen sind jeweils zwei aufeinander zugerichtete Schenkel 17, 18 und 24, 25 angeordnet. Mit dieser Ausführungsvariante des Gestänges 6 ist es möglich, ohne jeweilige Anpassung dieses Gestänges 6 den Behältermantel mit beliebiger Höhe auszubilden.

Fig. 7 zeigt eine Variante der Versperrvorrichtung 12, welche zentral wiederum ein Zylinderschloss (als Kreis angedeutet) umfassen kann, an dem zwei Schieberiegel 26 angeordnet sind, die das Gestänge 6 oder zumindest einen Teil des Gestänges 6 bilden und die horizontal verschiebbar sind - in Einbaulage betrachtet - entsprechend Doppelpfeil 27. Bei dieser Ausführungsvariante sind im Behältermantel3 und vorzugsweise auch im Behälterdeckel 2 entsprechende schlitzförmige Ausnehmungen vorgesehen, die auch verstärkt sein können, um die Ausrissfestigkeit zu erhöhen und in welche die Schieberiegel 26 im versperrten Zustand des Altstoffsammelbehälters 1 eingreifen.

Diese Ausführungsvariante der Versperrvorrichtung 12 eignet sich insbesondere dann, wenn der Behältermantel 3 bzw. ein Teil der Seitenwände des Behältermantels 3 mit dem Behälterboden 4 einstückig ausgebildet sind, da bei dieser Ausführungsvariante auf die in vertikaler Richtung sich erstreckenden Schenkel 17, 18 entsprechend der Ausführungsvariante nach den Fig. 1 bis 5 verzichtet werden kann. Es ist aber selbstverständlich auch möglich, bei dieser Ausführungsvariante vertikal sich erstreckende Leisten als weiteren Teil des Gestänges 6 vorzusehen, die bevorzugt zumindest annähernd über die gesamte Höhe des Altstoffsammelbehälters 1 sich erstrecken, um einerseits eine vertikale Versteifung des Behälters zu erreichen und andererseits den Behälterboden 4 mit dem Behältermantel 3 zu verbinden. Für letzteres ist es auch möglich, dass sich diese vertikalen Leisten nicht über die gesamte Höhe des Behältermantels 3 erstrecken. Im Wesentlichen übernehmen also die Leisten zumindest teilweise die Funktion der Schenkel 17, 18 nach der Ausführungsvariante der Erfindung entsprechend den Fig. 1 bis 5.

Es sei an dieser Stelle erwähnt, dass es im Rahmen der Erfindung selbstverständlich möglich ist, bei sämtlichen Ausführungsvarianten diese Leisten zur zusätzlichen Versteifung bzw. zur zusätzlichen Anbindung des Behälterbodens 4 an den Behältermantel 3 vorzusehen, wobei diese Leisten nicht zwangsweise außermittig angeordnet sein müssen, da sie den Einwurf des Altpapiers bzw. Altstoffes nicht stören, da sie an den Seitenbereichen im Behälterinnenraum 10 angeordnet sind. Es können beispielsweise diese Leisten in den jeweiligen Ecken angeordnet sein, bzw., sofern die Rückwand des Behältermantels 3 abnehmbar bzw. verschwenkbar ausgebildet ist - wie dies weiter unter noch näher erläutert wird -, können diese Ecken bzw. Längskanten ohne derartige Leisten ausgebildet sein.

Bei dieser Ausführungsvariante ist das Zylinderschloss wiederum im Behälterdeckel 2 angeordnet.

Die Ausführungsvariante nach Fig. 8 des Gestänges 6 ist ebenfalls am Behälterdeckel 2 angeordnet. Diese Fig. 8 zeigt einen Ausschnitt aus dem Altstoffsammelbehälter 1 im Bereich des Behälterdeckels 2 im Querschnitt betrachtet. Zum Unterschied zu voriger Ausführungsvariante sind aber bei dieser Ausführungsvariante zwei Sperrvorrichtungen 12 in Form von Zylinderschlössern in zwei einander gegenüberliegenden Seitenwänden des Behältermantels 3 angeordnet. Das Gestänge 6 ist in Form eines Ringes an der Unterseite des Behälterdeckels 2 ausgebildet, wobei unter Ring im Sinne der Erfindung gemeint ist, dass dieser Ring den Querschnitt hinsichtlich seiner Form des Behälterdeckels 2 entspricht, also beispielsweise fünf Ecken aufweist. Die auf den Behälterinnenraum 10 weisenden Enden dieses Gestänges 6 sind nach oben in Richtung auf die untere Oberfläche des Behälterdeckels 2 umgebogen, sodass also eine Art "Ringnut" entsteht. Der Riegel des Zylinderschlosses ist bei dieser Ausführungsvariante ebenfalls als Winkelelement 28 ausgebildet, wobei im versperrten Zustand das abgewinkelte Ende dieser Winkelelemente 28 in die Ringnut eingreift. Das Zylinderschloss bzw. die Zylinderschlösser weisen eine Vorspannung auf, durch welche das Winkelelement 28 nach dem Aufsperren - entsprechend Doppelpfeil 29 - an die innere Oberfläche der Seitenwände des Behältermantels 3 gedrückt wird, sodass diese Winkelelemente 28 aus dem Eingriffsbereich des Gestänges 6 gelangen und somit das Abheben des Behälterdeckels 2 möglich ist.

Fig. 9 zeigt eine mehrteilige Ausführung des Behältermantels 3 in Draufsicht. Bei dieser Ausführungsvariante weist der Behältermantel 3 einen ersten, vorderen Behältermantelteil 30 und einen zweiten hinteren Behältermantelteil 31 auf. Beide Teile haben jeweils drei Seitenwände, wobei diese Seitenwände, die jeweils vertikale Stirnseiten 32, 33 der Behältermantelteile 30, 31 bilden, einander überlappend im zusammengebauten Zustand des Behältermantels 3 angeordnet sind. Die Überlappung bei der Ausführungsvariante nach Fig. 9 ist großflächig, wodurch diesen Seitenwänden im überlappenden Bereich eine erhöhte Stabilität verliehen wird. Die Verbindung der beiden Behältermantelteile 30, 31 erfolgt über jeweils ein Klettband 34. Dieses Klettband 34 kann im Hinblick auf die Höhe des Behältermantels 3 eine beliebige Länge aufweisen, wodurch die Länge zumindest so groß ist, dass ein ausreichender Zusammenhalt der beiden Behälterteile 30, 31 gegeben ist. Es ist insbesondere auch möglich, dass die beiden Klettbänder 34 sich zumindest annähernd über die Gesamthöhe des Behältermantels 3 erstrecken, bzw. können über die Höhe gesehen auch mehrere Klettbänder 34 hintereinander angeordnet sein. Auch ein seitlicher Versatz von Klettbändern 34 - wiederum über die Höhe des Behältermantels 3 betrachtet - ist möglich.

Es sei an dieser Stelle erwähnt, dass in weiteren Ausführungsvarianten der Erfindung der erste, vordere Behältermantelteil 30 oder der zweite, hintere Behältermantelteil 31 einstückig mit dem Behälterboden 4 ausgebildet sein können, wobei bei diesen Ausführungen der Erfindung der Behälterboden 4 nicht oder nur teilweise im Bereich des jeweils entfernbaren Behältermantelteils 30, 31 wannenförmig ausgebildet sein kann.

Es ist auf diese Weise möglich, durch Lösen des Klettverschlusses - selbstverständlich sind auch an der äußeren Oberfläche des hinteren Behältermantelteils 31 die entsprechenden Gegenstücke des Klettbandes 34 angeordnet - Klettbänder sind ausreichend aus dem Stand der Technik bekannt, sodass deren Funktion an dieser Stelle nicht erörtert werden muss -, kann der hintere Behältermantelteil 31 entfernt werden, sodass der Zugang zum Behälterinnenraum 10 zur Entleerung des Altstoffsammelbehälters 1 erleichtert ist. Insbesondere ist dies von Vorteil, wenn im Behälterinnenraum 10 ein weiterer Behälter, wie z.B. ein Sammelsack, angeordnet ist, da damit dieser Sammelsack bzw. weitere Behälter nicht über den Behältermantel 3 hinausgehoben werden muss. Der vordere Behältermantelteil 30 kann mit dem Gestänge 6 - wie vorab beschrieben - verbunden sein.

Auch in Fig. 10 ist eine zweiteilige Ausführung des Behältermantels 3 mit einem vorderen Behältermantelteil 30 und dem hinteren Behältermantelteil 31 dargestellt. Bei dieser Ausführungsvariante sind - wie dies auch in Fig. 5 dargestellt ist - im Bereich des Gestänges 6 über die Schrauben 19 die Laschen 22 am Gestänge 6 angeordnet - es ist auch eine einteilige Ausbildung des Gestänges 6 mit den Laschen 22 möglich - wobei diese Laschen 22 über das Gestänge 6 in Richtung auf den hinteren Behältermantelteil 31 vorragend ausgebildet sind. Es ist damit möglich, die beiden Seitenwände des hinteren Behältermantelteils 31 in diesen Bereich zwischen die Laschen 22 und die Seitenwände des vorderen Behältermantelteils 30 - wie dies aus Fig. 10 ersichtlich ist - einzuschieben, sodass diese Seitenwände des hinteren Behältermantelteils 31 lagefixiert sind. Es kann bei dieser Ausführungsvariante auf zusätzliche Klettbänder 34 - entsprechend der Ausführungsvariante nach Fig. 9 - verzichtet werden - wenngleich deren Anordnung selbstverständlich möglich ist-, insbesondere dann, wenn der Behälterdeckel 2 und der Behälterboden 4 - wie bereits oben ausgeführt - wannenförmig mit den Deckelseitenwänden 8 und Bodenseitenwänden 16 ausgebildet sind, wodurch eine zusätzliche Stabilität in horizontaler Richtung erreicht werden kann.

Es ist möglich, zwei Laschen 22 einander gegenüberliegenden am Gestänge 6 im Bereich des Behälterdeckels 2, d.h. im Bereich der oberen Stirnseiten des Behältermantels 3 anzuordnen, bzw. können nach einer weiteren Ausführungsvariante auch mehrere Laschen 22 über die Höhe des Gestänges 6 in Richtung der Höhe des Behältermantels 3 gesehen, angeordnet werden, beispielsweise je zwei Laschen 22 am oberen Endbereich und am unteren Endbereich des Behältermantels 3. Auch Ausführungsvarianten mit drei, vier, fünf oder mehr Laschen 22 pro Seitenwand über die Höhe des Behältermantels 3 sind selbstverständlich möglich.

Bei der Ausführungsvariante nach Fig. 11 des Behältermantels 3 ist die rückwärtige Seitenwand über ein Scharniergelenk 35 am Behälterboden 4 angelenkt und entsprechend Doppelpfeil 36 verschwenkbar, sodass über die Verschwenkbarkeit wiederum der Zugang des Behälterinnenraums 10 auf einfache Weise ermöglicht wird. Wie strichliert angedeutet, kann der hintere Behältermantelteil 31 auch die Seitenwände - wie dies bereits aus den Fig. 9 und 10 ersichtlich ist - aufweisen, sodass zumindest bereichsweise im Seitenwandbereich des Behältermantels 3 eine Überlappung der Seitenwände der Behältermantelteile 30, 31 möglich ist. Ebenso ist auch bei dieser Ausführungsvariante möglich, die Laschen 22 nach Fig. 10 anzuordnen, um im zusammengebauten Zustand des Behältermantels 3 eine zusätzliche Lagefixierung der inneren Seitenwände des Behältermantels 3, d.h. der Seitenwände des Behältermantelteils 31, zu erhalten. Insbesondere von Vorteil ist diese Ausführungsvariante, wenn der Behälterboden 4 einteilig mit dem vorderen Behältermantelteil 30 des Behältermantels 3 ausgebildet ist.

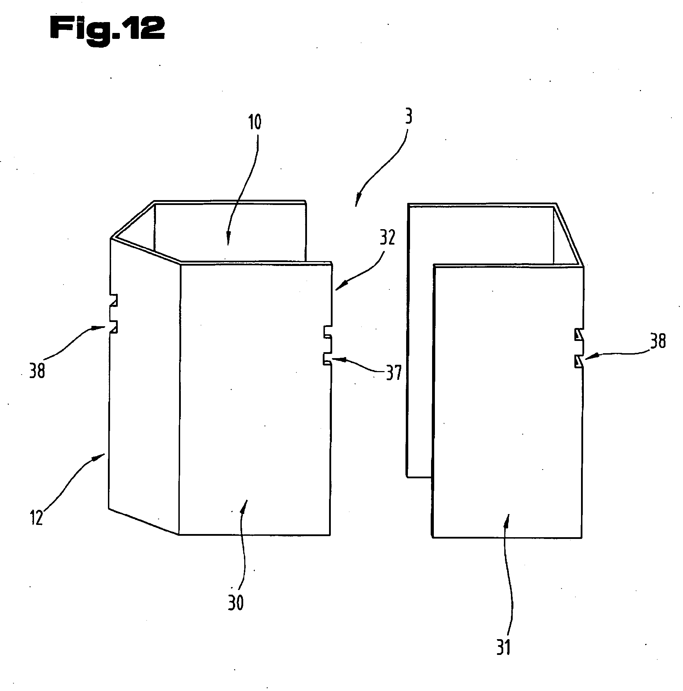

Fig. 12 zeigt schließlich eine Ausführungsvariante des Behältermantels 3, wiederum mit einem vorderen Behältermantelteil 30 und einem hinteren Behältermantelteil 31. Insbesondere ist diese Ausführungsvariante zur Anordnung eines Sammelsackes im Behälterinnenraum 10 vorgesehen. Dazu weisen die Seitenwände des vorderen Behältermantelteils 30 im oberen dem Behälterdeckel 2 zugewandten Endbereich in den Stirnseiten 32 Feistellungen 37 und an der vorderen Längskante, die die Spitze 12 bildet, Durchbrüche 38 auf.

Ebenso weist der hintere Behältermantelteil 31 im Längskantenbereich zwischen den Seitenwänden und der Rückwand des Altstoffsammelbehälters 1 diese Durchbrüche 38 auf. Es ist damit möglich, den zusätzlich angeordneten Sammelsack in diesen Freistellungen 37 bzw.

Durchbrüchen 38 hinsichtlich seiner Lage zu fixieren, in dem dieser Sammelsack darin eingeklemmt wird. Darüber hinaus ist es möglich, das offene Ende des Sammelsacks über die oberen Stirnseiten des Behältermantels 3 - wie dies bereits oben ausgeführt wurde - umzuschlagen, sodass also der gesamte Querschnitt des Behälterinnenraums 10 über die gesamte Füllzeit des Altstoffsammelbehälters offen bleibt. Es kann damit auf zusätzliche Vorrichtungen zur Lagefixierung am Gestänge 6 - wie dies bereits oben ausgeführt wurde - verzichtet werden.

Es ist im Rahmen der Erfindung auch möglich, eine von zwei abweichende Anzahl an Freistellungen 37 bzw. Durchbrüchen 38 vorzusehen.

Die wannenförmige bzw. tassenförmige Ausführung des Behälterdeckels 2 bietet weiters den Vorteil, dass damit die Verbindungsstellen mit dem Gestänge 6 von den Deckelseitenwänden 8 außen abgedeckt werden können, und damit deren Zugänglichkeit erschwert ist, wodurch wiederum eine größere Sicherheit gegen unbefugtes Öffnen erreicht werden kann.

Der Behälterboden 4 kann ebenfalls versperrbar mit dem Behältermantel 3 ausgebildet sein. In diesem Fall kann diese Versperrbarkeit analog zu jener des Behälterdeckels 2 ausgebildet sein.

Die Ausführungsbeispiele zeigen mögliche Ausführungsvarianten des Altstoffsammelbehälters 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Altstoffsammelbehälters 1 dieser bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1, 2, 3, 4, 5; 6; 7; 8; 9; 10; 11; 12 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Altstoffsammelbehälter
- 2: Behälterdeckel
- 3: Behältermantel
- 4: Behälterboden
- 5: Winkel

- 6: Gestänge
- 7: Einwurfschlitz
- 8: Deckelseitenwand
- 9: Spitze
- 10: Behälterinnenraum

- 11: Eingriffsabweiser
- 12: Sperrvorrichtung
- 13: Linie
- 14: Drehriegel
- 15: Basis

- 16: Bodenseitenwand
- 17: Schenkel
- 18: Schenkel
- 19: Schraube
- 20: Oberfläche

- 21: Oberfläche
- 22: Lasche
- 23: Basis
- 24: Schenkel
- 25: Schenkel

- 26: Schieberiegel
- 27: Doppelpfeil
- 28: Winkelelement
- 29: Doppelpfeil
- 30: Behältermantelteil

- 31: Behältermantelteil
- 32: Stirnseite
- 33: Stirnseite
- 34: Klettband
- 35: Scharniergelenk

- 36: Doppelpfeil
- 37: Freistellung
- 38: Durchbruch

## Patentansprüche

1. Altstoffsammelbehälter (1), insbesondere für Datenträger, wie z.B. Papier, mit einem Behälterboden (4), einem Behältermantel (3) und einem Behälterdeckel (2), die einen Behälterinnenraum (10) definieren, wobei im Behälterinnenraum (10) zumindest ein Gestänge (6) angeordnet ist, mit dem der Behälterdeckel (2) über zumindest eine Sperrvorrichtung (12) lösbar verbunden ist, **dadurch gekennzeichnet, dass** das Gestänge (6) - in Draufsicht auf den Behälter betrachtet - außermittig angeordnet ist.

2. Altstoffsammelbehälter (1) nach Anspruch 1, **dadurch gekennzeichnet, dass** das Gestänge (6) mit dem Behältermantel (3) verbunden ist.

3. Altstoffsammelbehälter (1) nach Anspruch 1 oder 2, **dadurch gekennzeichnet, dass** das Gestänge (6) U-förmig mit einer Basis (15) und zwei Schenkel (17, 18) ausgebildet ist und in Bezug auf die Schenkel (17, 18) vertikal im Behälterinnenraum (10) angeordnet ist.

4. Altstoffsammelbehälter (1) nach Anspruch 3, **dadurch gekennzeichnet, dass** die Sperrvorrichtung (12) im bzw. am Behälterdeckel (2) angeordnet ist und mit der Basis des U-förmigen Gestänges (6) zum Versperren des Behälters zusammenwirkt.

5. Altstoffsammelbehälter (1) nach Anspruch 1, **dadurch gekennzeichnet, dass** das Gestänge (6) am Behälterdeckel angeordnet ist.

6. Altstoffsammelbehälter (1) nach Anspruch 5, **dadurch gekennzeichnet, dass** das Gestänge (6) die Form des Querschnittes des Behältermantels (3) - in Draufsicht betrachtet - aufweist.

7. Altstoffsammelbehälter (1) nach Anspruch 5 oder 6, **dadurch kennzeichnet, dass** das Gestänge (6) mehrteilig ausgebildet ist und zumindest ein Teil mit dem Behältermantel (3) verbunden ist.

8. Altstoffsammelbehälter (1) nach einem der Ansprüche 1 bis 7, **dadurch gekennzeichnet, dass** der Behälterboden (4) zumindest zwei in Richtung auf den Behältermantel (3) weisende Seitenwände aufweist die mit dem Gestänge (6) verbunden sind.

9. Altstoffsammelbehälter (1) nach einem der Ansprüche 1 bis 8, **dadurch gekennzeichnet, dass** der Behältermantel (3) im Verbindungsbereich mit dem Gestänge (6) zwischen diesem und den Seitenwänden des Behälterbodens (4) angeordnet ist.

10. Altstoffsammelbehälter (1) nach einem der vorhergehenden Ansprüche, **dadurch gekennzeichnet, dass** die zumindest eine Sperrvorrichtung (12) durch eine Zylinderschloss mit einem Drehriegel (14), der an einem Ende des Zylinderschlosses angeordnet ist, welches in Richtung auf den Behälterinnenraum (10) weist, gebildet ist, und der Drehriegel (14) mit dem Gestänge (6) zum Versperren des Behälters zusammenwirkt.

11. Altstoffsammelbehälter (1) nach Anspruch 10, **dadurch gekennzeichnet, dass** der Drehriegel (14) als Winkelelement (18) ausgebildet ist.

12. Altstoffsammelbehälter (1) nach einem der vorhergehenden Ansprüche, **dadurch gekennzeichnet, dass** der Behältermantel (3) zumindest zweiteilig ausgebildet ist.

13. Altstoffsammelbehälter (1) nach Anspruch 12, **dadurch gekennzeichnet, dass** die beiden Teile über ein Klettband (34) miteinander verbunden sind.

14. Altstoffsammelbehälter (1) nach einem der Ansprüche 12 oder 13, **dadurch gekennzeichnet, dass** am Gestänge (6) im Behälterinnenraum Laschen (22) angeordnet sind, die beabstandet zu einer inneren Oberfläche (20) des Behältermantels (3) sind und die überlappenden Seitenwände eines Teils des Behältermantels (3) zwischen diesen Laschen (22) und den überlappenden Seitenwänden des zweiten Teils des Behältermantels (3) angeordnet sind.
